Europäisches Patentamt

**European Patent Office**

Office européen des brevets

(11) Publication number: **0 217 368**
**A2**

## EUROPEAN PATENT APPLICATION

(21) Application number: **86113471.6**

(22) Date of filing: **01.10.86**

(51) Int. Cl.⁴: **A 23 L 1/18**

(30) Priority: **01.10.85 US 782753**

(43) Date of publication of application:
**08.04.87 Bulletin 87/15**

(84) Designated Contracting States:
**AT BE CH DE ES FR GB GR IT LI LU NL SE**

(71) Applicant: **DNA PLANT TECHNOLOGY CORPORATION**
(under the laws of the state of Delaware)
**2611 Branch Pike**
**Cinnaminson, New Jersey(US)**

(72) Inventor: **Evans, David Alan**
**917 Lincoln Avenue**
**Palmyra Burlington New Jersey(US)**

(72) Inventor: **Lipschutz, Leslie**
**8 Belle Lane**
**Cinnaminson Burlington New Jersey(US)**

(74) Representative: **Patentanwälte Grünecker, Kinkeldey,**
**Stockmair & Partner**
**Maximilianstrasse 58**
**D-8000 München 22(DE)**

(54) Flavor impregnated popcorn.

(57) The present invention relates to a method for flavoring corn kernels which comprise soaking the kernels in an aqueous solution comprising a flavoring component, for a period of time and at a temperature sufficient to allow the flavoring to impregnate the corn kernels.

EP 0 217 368 A2

Croydon Printing Company Ltd.

The present invention relates to a new method of flavoring popcorn kernels. More particularly, the invention relates to a method of flavoring popcorn kernels by impregnation of flavoring, rather than coating the kernels with flavoring.

Popcorn has for some time been a popular snack food product. In recent years, flavored popcorns, such as those flavored with salt, sugar, cheese, chocolate, or fruit flavors have become of particularly popular item. Because of the current popularity of this flavored popcorn, new ways of producing a better flavored product are instantly being sought. A number of different methods are currently being employed for flavoring both popped and unpopped kernels. Certain techniques require that the flavor be added after the popping process, i.e., the actual popped corn is simply coated with a dried flavoring, such as salt or cheese powder. Techniques of this sort are described in U.S. Pat. Nos. 4,171,667; 3,882,255; 3,783,820; 3,647,474; and 3,617,389. Other methods require that the flavor be added during the popping process (see, for example, U.S. Pat. Nos. 4,163,006; 4,096,281; 3,973,045; 3,961,091; 3,851,574, and 3,641,916). As in the process in which flavoring is added after popping, this procedure results in popcorn which is simply superficially coated with the flavoring. It is also known to add flavoring to the unpopped kernels prior to popping, as described in U.S. Pat. No. 3,704,133. In the latter case, popcorn kernels are treated with a mixture of shortening, water, a lipophilic surfactant and flavoring, with an aim to coating and adhering the flavoring to the surface of the unpopped kernel.

All of the procedures described above produce a product which at least has a superficial coating of the desired flavor. The apparent disadvantages of such a product are clear: the possibilities of uneven coating over the entire population of kernels is great, with some popped kernels possibly not even getting coated; also, even if the kernels do get coated, the flavor is one which does not penetrate the entire popped kernel, leaving one with a less flavorful product. Although the results achieved by these processes is far from satisfactory, it has not heretofore been possible to produce a flavored product which was uniformly and completely flavored throughout.

It has now been unexpectedly discovered that is is possible to actually impregnate the entire kernel of corn, prior to popping, thus yielding, upon popping, a popcorn which is completely and fully flavored. In other words, rather than coating the surface of either the unpopped or popped kernel, the flavor is allowed to actually penetrate the seed coat of the unpopped kernel, so that the kernel is flavored both internally and externally. This produces a more fully and uniformly flavored, and thus more desirable final product. In addition to yielding a more flavorful product, however, the process is extremely simple and inexpensive to employ.

The present invention relates to a method for flavoring corn kernels which comprises soaking the kernels in an aqueous solution comprising a flavoring component, for a period of time and at a temperature sufficient to allow the flavoring to impregnate the corn kernel.

The present method for improved flavoring of corn kernels to be popped is based on the observation that soaking unpopped kernels in a flavored solution for a relatively prolonged period of time allows actual penetration of the flavoring through the hull of the kernel, and into the interior of the kernel itself. In general, the kernels are submerged in an aqueous solution containing the desired flavor for a period of from about 60 minutes to about 24 hours. As is known, excess water can prevent satisfactory popping, so it is important that the kernels not be left for a period of longer than one day. The preferred length of time is between about 60 minutes to 3 hours, with the most preferred soaking time being about 90-120 minutes.

To enhance flavor penetration the aqueous solution should be maintained at least above ambient temperature, and preferably in the range of about 100-170°F. Temperatures of between 130-160°F are particularly favored, during the period of soaking. The concentration of the flavoring to be added depends, of course, on the nature of the flavoring, the concentration of the flavoring used, and the intensity of the flavor desired in the final product. It is well within the skill of the experienced worker to vary the amount of flavoring added to the soaking water in order to achieve the desired result.

The present method is particularly well adapted for use with salt-based flavorings. Among the preferred flavorings are, for example, ordinary table salt (sodium chloride), garlic salt, onion salt, celery salt or butter flavored salt, all of which are readily commerically available. In order to obtain a satisfactory intensity of flavor in the final product, it is preferred that the salt-based flavoring be employed in an amount of at least 0217368 16g/100ml of water for soaking. Particularly good results are achieved when the flavoring is present in an amount of from about 16-32g/100ml of water. These proportions, of course, are intended only as guidelines and may be readily varied depending on the individual taste which is desired in the final product.

Although the above types of flavorings are particularly preferred, the present method is not limited to use with salt-based flavorings. Other commonly used flavors, such as sugar, chocolate, cheese, fruit, maple, cinnamon, and the like may also be readily adapted for use in this process. These flavorings may be added to solution in powdered form, such as extracts or liqueurs. As previously noted, the concentrations may readily be varied in order to achieve the desired flavor intensity of the final product, and based on the initial concentration of the starting material. It will be readily apparent to the skilled artisan how to determine the preferred concentrations for the flavor of choice.

The above procedure describes the process steps required to achieve the desired, flavor impregnation of the unpopped kernels. Following the soaking process, however, a number of additional steps are preferably employed in order to best prepare the impregnated kernel for popping. Following the soaking of the kernels in the warmed flavor solution, the kernels and solution should be chilled in an ice waterbath to bring the temperature down to about 60°C. This usually requires a chilling period of about 30 minutes or so. At this point, the kernels are drained of the flavoring solution, and rinsed with water to remove any remaining flavoring solution. The kernels are then dried, for a period of about 1-24 hours; drying may be done in any suitable manner, but drying in a warm oven, for a period of 1-3 hours, at a temperature of between 140-180°F has proven particularly favorable. At this point the kernels are ready for popping by any of the traditional methods known for popping corn.

The present method may be further understood by reference to the following non-limiting examples:

## EXAMPLE 1

Unpopped kernels were soaked in an aqueous solution containing 32mg NaCl/100ml of water, at a temperature of about 150°F, on a warm hot plate for a period of about 90 minutes. Following the soaking treatment, the kernel-containing solution was then chilled, in an ice bath, for about 30 minutes. The final temperature was about 60°F.

The kernels were then drained, and a portion removed prior to rinsing. The remaining portion was rinsed off with water and both portions were placed on paper toweling and dried in a forced draft oven at a temperature of 80-90°C for a period of about 60 minutes.

The flavor impregnated kernels were then compared with a population of kernels which were treated i.e., soaked in water without salt, and each population was then tested for a comparison of the amount of sodium which had penetrated the treated kernels, relative to the amount present in untreated kernels. Both unpopped and popped kernels were tested for their salt content. Popped kernels were popped in a WearEver Hotair popcorn popper. The results of the impregnation procedure are demonstrated in Table 1.

TABLE I

Results of sodium ion ($Na^+$) analysis
of untreated and salt impregnated popcorn

| Variable | Control (mg/100g) | Impregnated (mg/100g) |
|---|---|---|
| 1. unpopped | | |
| a) whole kernel | 8.73 | 557 |
| b) seed coat | 39.50 | 2263 |
| c) endosperm | 1.41 | 98.3 |
| 2. Popped | | |
| a) whole kernel | 3.52 | 772 |
| b) seed coat | 7.05 | 3723 |
| c) endosperm | 2.82 | 152 |

Note: unrinsed, impregnated kernels contained 914 mg/100g of $Na^+$.

EXAMPLE 2

0217368

The treated and untreated kernels were also compared for their relative popping qualities. Table 2 shows the results of these comparative tests. The results show that there is substantially no difference in the quality of the popped corn resulting from the impregnation treatment when compared with the untreated popped kernels. This adequately demonstrates that the impregnation process has no adverse effects on the final product.

## TABLE II

Evaluation of popping of impregnated
popcorn v. unimpregnated popcorn

| | No. of kernels/10g popped | Vol/kernel (cc) | Expansion rate (cc/g) | % duds |
|---|---|---|---|---|
| Control | 84.2 | 3.6 | 29.7 | 2.9 |
| Impregnated | 80.5 | 4.2 | 38.6 | 6.9 |

WHAT IS CLAIMED IS:

1. A method for flavoring corn kernels which comprises soaking the kernels in an aqueous solution comprising a flavoring component, for a period of time and at temperature sufficient to allow the flavoring to impregnate the corn kernels.

2. The method of Claim 1 wherein the kernels are soaked for about 60 minutes to about 24 hours.

3. The method of Claim 1 or 2 wherein the kernels are soaked at a temperature of about 100-170°F.

4. The method of any of the Claims 1-3 wherein the kernels are soaked at a temperature of about 130-160°F.

5. The method of any of the Claims 1-4 wherein the flavoring is salt-based.

6. The method of any of the Claims 1-5 wherein the flavoring is selected from the group consisting of sodium chloride, garlic salt, celery salt and onion salt.

7. The method of any of the Claims 1-6 wherein the flavoring is present in an amount of at least 16g/100ml of water.

8. The method of any of the Claims 1-7 wherein the flavoring is present in an amount of between about 16g - 32g/100ml of water.

9. The method of any of the Claims 1-8 which further comprises chilling the soaked kernels; rinsing the soaked kernels; and drying the kernels prior to popping.

10. Corn kernels impregnated by the method of any of the Claims 1-9.